# NEUE EUROPÄISCHE PATENTSCHRIFT

(11) **EP 0 441 931 B2**
(45) Veröffentlichungstag und Bekanntmachung des Hinweises auf die Entscheidung über den Einspruch: **22.01.1997**
(45) Hinweis auf die Patenterteilung: 05.01.1994
(21) Anmeldenummer: 90912751.6
(22) Anmeldetag: 01.09.1990
(51) Int. Cl.: C01G 19/08

(54) **VERFAHREN ZUR KONTINUIERLICHEN HERSTELLUNG VON ZINNTETRACHLORID**
PROCESS FOR THE CONTINUOUS PRODUCTION OF TIN TETRACHLORIDE
PROCEDE DE FABRICATION EN CONTINU DE TETRACHLORURE D'ETAIN

(30) Priorität: 04.09.1989 DE 3929300
(43) Veröffentlichungstag der Anmeldung: 21.08.1991
(73) Patentinhaber: ELEKTRO-CHEMIE IBBENBÜREN GMBH, D-49479 Ibbenbüren (DE)
(72) Erfinder: GROSSMANN, Horst, D-3003 Ronnenberg 2 (DE); HAUBOLD, Horst, D-4530 Ibbenbüren (DE)
(74) Vertreter: Haar, Lucas Heinz Jörn, Dipl.-Ing.
(86) Internationale Anmeldenummer: DE9000664
(87) Internationale Veröffentlichungsnummer: WO9103425

(56) Entgegenhaltungen:
- EP-A- 0 057 929
- EP-A- 0 094 003
- US-A- 877 248

## Beschreibung

Die Erfindung betrifft ein Verfahren zur kontinuierlichen Herstellung von Zinntetrachlorid durch Umsetzung von überschüssigem, metallischem Zinn mit Chlor in einem Reaktionsraum in Gegenwart von flüssigem Zinntetrachlorid, wobei in einem Kreislauf dem Reaktionsraum Zinntetrachlorid entnommen und gegebenenfalls nach Kühlung wieder zugeführt und soviel Zinntetrachlorid aus dem Kreislauf abgeführt wird, daß die Standhöhe des Zinntetrachlorids im Reaktionsraum gleich bleibt.

Zinntetrachlorid ist ein wichtiges Zwischenprodukt für die Herstellung von Organozinnverbindungen. Da diese Verbindungen oft mit Lebensmitteln in Kontakt kommen, besteht die Forderung nach besonderer Reinheit ihrer Ausgangsprodukte, also auch des Zinntetrachlorids.

Verfahren für die Herstellung von Zinntetrachlorid sind lange bekannt. In der Regel wird dabei von Zinn-Metall und Chlorgas ausgegangen. Bereits R. Lorenz hat in der Zeitschrift "Anorganische Allgemeine Chemie" 10, 1895, Seiten 44 bis 46, die wesentlichen Punkte eines solchen Verfahrens beschrieben.

Ein Verfahren der eingangs genannten Art zur Herstellung von Zinntetrachlorid ist aus der EP-A-57 929 bekannt. Bei diesem bekannten Verfahren wird Chlorgas unten in den mit Zinn und flüssigem Zinntetrachlorid gefüllten Reaktionsraum eingeleitet und das gebildete Zinntetrachlorid oben aus dem Reaktionsraum entnommen und in mindestens einem weiteren Nachbehandlungs-Reaktionsraum, der mit metallischem Zinn und Zinntetrachlorid gefüllt ist, ohne Zuführung von Chlor nachbehandelt. Die Regulierung der Reaktionstemperatur erfolgt bei diesem Verfahren dadurch, daß ein Teil des dem Reaktionsraum entnommenen Zinntetrachlorids gekühlt und in den Reaktionsraum unten wieder eingeführt wird. Das bekannte Verfahren ist in seiner Leistung beschränkt. Werden mehr als 300 Ndm³/h Chlor je 1 dm³ im Reaktionsraum vorhandenen flüssigen Zinntetrachlorids eingeleitet, so ist die Temperatur im Reaktionsraum nicht mehr ausreichend beherrschbar.

In der US-A-877 248 ist ein diskontinuierliches Verfahren zur Herstellung von Zinntetrachlorid beschrieben, bei dem in einem teilweise mit Zinntetrachlorid gefüllten Reaktionsraum Chlorgas mit Hilfe eines Injektors in das flüssige Zinntetrachlorid eingeleitet wird. Hierdurch wird in dem Zinntetrachlorid eine Zirkulationsströmung erzeugt und das eingeleitete Chlorgas im Zinntetrachlorid gelöst. Über eine mechanische Zuführeinrichtung wird am Boden des Reaktionsraums metallisches Zinn zugeführt, welches mit dem gelösten Chlor reagiert und in Zinntetrachlorid umgesetzt wird. Nach Beendigung des Prozesses wird der Reaktionsbehälter geleert, nachdem zuvor eine ausreichende Menge zinnhaltigen Materials zugegeben worden war, um das restliche Chlor im Reaktionsraum zu binden.

Aufgabe der Erfindung ist es, ein Verfahren der eingangs genannten Art zur kontinuierlichen Herstellung von Zinntetrachlorid anzugeben, welches sich durch eine hohe Effektivität und eine gute Beherrschbarkeit auszeichnet.

Erfindungsgemäß wird diese Aufgabe dadurch gelöst, daß das Chlor außerhalb des gesamten im Kreislauf befindlichen Reaktionsraums in den im Kreis geführten Strom von Zinntetrachlorid in einer solchen Menge eingeleitet wird, daß es vollständig in Zinntetrachlorid gelöst wird. Das erfindungsgemäße Verfahren beruht auf der überraschenden Erkenntnis, daß die gute Löslichkeit von Chlor im Zinntetrachlorid mit Vorteil dazu genutzt werden kann, um einen günstigen Reaktionsverlauf herbeizuführen und die Reaktionsbedingungen bequem einstellen zu können. So ermöglicht die Regelung der Kreislaufmenge auf einfache Weise eine Kontrolle des Verfahrens und es hat sich gezeigt, daß sich bei dem erfindungsgemäßen Verfahren eine bessere Verteilung der Reaktanten erzielen läßt, wodurch die Reaktion vergleichmäßigt wird. Eine Beeinträchtigung des Nachrutschens der Zinnschüttung im Reaktionsraum durch Zusammenbacken einzelner Zinn-Granalien wird vermieden. Überraschenderweise hat sich weiterhin gezeigt, daß mit dem erfindungsgemäßen Verfahren die Umsetzungsleistung, bezogen auf die Größe des Reaktionsraums, um ein Mehrfaches gesteigert werden kann, wodurch sich der Anlagenaufwand erheblich verringert. So konnten je 1 dm³ im Reaktionsraum vorhandenen Zinntetrachlorids über 900 Ndm³/h Chlor eingeleitet werden. Das erfindungsgemäße Verfahren ist weiterhin störungssicher, da bei einem Ausfall der Kreislaufförderung auch der Chlortransport zum Reaktionsraum unterbrochen wird und damit die Reaktion zum Stillstand kommt.

Das für die Reaktion benötigte Chlor kann bei dem erfindungsgemäßen Verfahren in gasförmiger oder in flüssiger Form in den Kreislauf aus Zinntetrachlorid eindosiert werden, wobei jeweils sofort eine klare, gelbe Lösung von Chlor im Zinntetrachlorid entsteht. Bei der Verwendung von flüssigem Chlor kann zweckmäßigerweise die benötigte Verdampfungswärme der Reaktionswärme entnommen werden, die in dem aus dem Reaktor austretendem, flüssigem Zinntetrachlorid enthalten ist.

Nach einem weiteren Vorschlag des erfindungsgemäßen Verfahrens wird das aus dem Kreislauf abgeführte, gebildete Zinntetrachlorid durch einen oberen, ebenfalls mit metallischem Zinn, z.B. in Form von Zinn-Granalien, gefüllten Teil des Reaktionsraums geleitet, wobei dieser Teil über dem Teil des Reaktionsraums liegt, durch den das im Kreis geführte Zinntetrachlorid strömt. Aufdiese Weise steigt das bei der Reaktion des gelösten Chlors mit der Zinn-Schüttung gebildete Zinntetrachlorid in den oberen Teil des Reaktionsraums, wobei in der Reaktionslösung verbliebenes Chlor mit der Zinn-Schüttung über der Reaktionszone reagieren kann. Hierbei erweist es sich als Vorteil, daß der durch das Zinntetrachlorid im oberen Teil des Reaktionsraums hervorgerufene hydrostatische Druck im unteren Teil die Lösbarkeit von Chlor im Zinntetrachlorid steigert und ein Ausgasen von Chlorverhindert. Der mit Chlor beladene, im Kreis geführte Zinntetrachloridstrom ist durch chlorfreies Zinntetrachlorid abgedeckt, wodurch ein Austreten von Chlor an der Einfüllöffnung für das Zinn vermieden wird. Zweckmäßigerweise wird derobere Teil des Reaktionsraums so temperiert, daß die Nachreaktion dort vollständig ist. Die Temperierung kann vorteilhaftdurch den Zinntetrachlorid-Kreislauferfolgen, indem beispielsweise das dem Reaktionsraum entnommene und im Kreis geführte Zinntetrachlorid den oberen Teil des Reaktionsraums umströmt. Das aufsteigende Zinntetrachlorid kann am oberen Ende des Reaktionsraums und der darin befindlichen Zinn-Schüttung über einen Überlauf entnommen werden. Gleichzeitig kann die Zinnschüttung entsprechend dem Verbrauch durch Nachfüllen von Zinn-Granalien auf konstanter Höhe gehalten werden. Reaktionsgase treten aus der Einfüllöffnung des Reaktionsraums nicht aus. Aus Sicherheitsgründen kann jedoch vorgesehen sein, den Gasraum über dem Zinntetrachlorid-Spiegel mit Stickstoff abzudekken.

Obwohl bei dem erfindungsgemäßen Verfahren die Strömungsrichtung des Zinntetrachlorid-Kreislaufs frei gewählt werden kann, ist es vorteilhaft, wenn die Lösung aus Zinntetrachlorid und Chlor unten in den Reaktionsraum eingeleitet und die mit Chlor abgereicherte Lösung weiter oben, vorzugsweise etwa in der Mitte, aus dem Reaktionsraum entnommen wird.

Bei dem erfindungsgemäßen Verfahren sollte die im Reaktionsraum von dem im Kreis geführten Zinntetrachlorid durchströmte Schüttung aus Zinn, z.B. in Form von Zinn-Granalien, wenigstens das 3-fache Gewicht des stündlich eingeleiteten Chlor-Gewichts haben. Weiterhin wurde gefunden, daß das erfindungsgemäße Verfahren störungsfrei betrieben werden kann, wenn je 1 kg pro Stunde eingeleiteten Chlor-Gewichts wenigstens 130 dm³/h Zinntetrachlorid im Kreis geführt werden. Ist die im Kreis geführte Zinntetrachlorid-Menge im Verhältnis zum eingeleiteten Chlor-Gewicht größer, so ist dies für den Verfahrensablauf günstig. Die Temperatur am Eintritt des Zinntetrachlorids in den Reaktionsraum ist im Verhältnis zur eingeleiteten Chlormenge erforderlichenfalls durch Kühlung so einzustellen, daß die Temperatur am Austritt unter dem Siedepunkt des Zinntetrachlorids bleibt. Eine günstige Reaktionsgeschwindigkeit wird bei dem erfindungsgemäßen Verfahren erzielt, wenn die Temperatur am Eintritt des Zinntetrachlorids in den Reaktionsraum 70 bis 80°C beträgt.

Bei dem erfindungsgemäßen Verfahren hat es sich weiterhin als günstig erwiesen, wenn das Gewicht der Zinn-Schüttung im oberen Teil des Reaktionsraums mindestens dem der Zinn-Schüttung im unteren, vom Zinntetrachlorid-Kreislauf durchströmten Teil des Reaktionsraums, entspricht. Die Temperatur im oberen Teil des Reaktionsraums sollte zweckmäßigerweise auf der Temperatur des unteren Teils des Reaktionsraums gehalten werden. Das erfindungsgemäße Verfahren ermöglicht auf einfache und leicht beherrschbare Weise ein kontinuierliche Herstellung von Zinntetrachlorid aus metallischem Zinn und Chlor in außerordentlicher Reinheit. So war es beispielsweise bei Produktionsversuchen leicht möglich, den Chlorgehalt des Zinntetrachlorids unter 10 ppm zu halten.

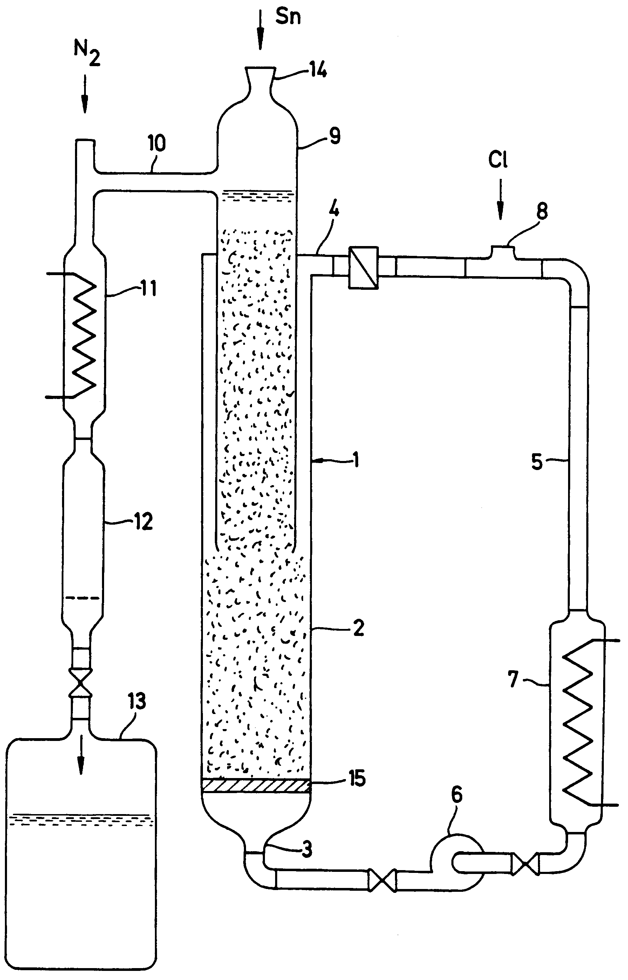

Das erfindungsgemäße Verfahren wird nachfolgend anhand eines in der Zeichnung dargestellten Beispiels näher erläutert:

Als Reaktor 1 ist ein erstes stehend angeordnetes Glasrohr 2 mit einem Innendurchmesser von 80 mm vorgesehen, das eine untere Öffnung 3 und eine an seinem oberen Ende liegende, seitliche Öffnung 4 aufweist. Beide Öffnungen 3,4 sind mit einer ebenfalls aus Glasrohren zusammengesetzten Kreislaufleitung 5 verbunden, in der eine Pumpe 6 und ein Wärmetauscher 7 angeordnet sind. Zwischen der seitlichen Öffnung 4 des Reaktors 1 und der Saugseite der Pumpe 6 ist die Kreislaufleitung 5 mit einer Einlaßöffnung 8 für die Zuführung von Chlorgas versehen. In das erste Glasrohr 2 istvon oben ein dünneres zweites Glasrohr 9 eingesetzt, welches mit seiner unteren Öffnung etwa in der Mitte des Glasrohrs 2 endet und mit dem oberen Ende des Glasrohrs 2 dicht verbunden ist. An seinem oberen Ende weist das Glasrohr 9 eine seitliche Öffnung 10 auf, an die über einen Wärmetauscher 11 und ein Filter 12 ein Auffangbehälter 13 für das produzierte Zinntetrachlorid angeschlossen ist. Das obere Ende des Glasrohrs 9 ist mit einem Trichter 14 zum Einfüllen von Zinn-Granalien versehen. Über der unteren Öffnung 3 des Glasrohrs 2 befindet sich eine Lochplatte 15.

In den Reaktor 1 wird eine Zinn-Schüttung von 1100 mm Höhe eingebracht, die von der Lochplatte 15 bis unter die seitliche Öffnung 10 reicht. Der Reaktor 1 und die Kreislaufleitung 5 werden mit flüssigem Zinntetrachlorid gefüllt und nach Anfahren der Pumpe wird eine Kreislaufmenge von 400 bis 450 dm³/h eingestellt. In diesen Kreislauf wird über ein Rotameter kontinuierlich eine Chlormenge von 290 Ndm³/h eindosiert. Nach einer Stunde Betriebsdauer bei konstanten Betriebsbedingungen hat die Zinntetrachloridmenge im Überlaufgefäß um 775 ml bzw. 1,72 kg Zinntetrachlorid zugenommen. Dabei hat sich im Zinntetrachlorid-Kreislauf zwischen Eingang und Ausgang der Hauptreaktionszone der Zinnschüttung im Glasrohr 2 eine Temperaturdifferenz von 10 Keingestellt. Die Temperatur am Ausgang der Reaktionszone betrug 91°C. Über den Wärmetauscher 7 wurde die vom Zinntetrachlorid aufgenommene Reaktionswärme abgeführt.

## Patentansprüche

1. Verfahren zur kontinuierlichen Herstellung von Zinntetrachlorid durch Umsetzung von überschüssigem, metallischem Zinn mit Chlor in einem Reaktionsraum in Gegenwart von flüssigem Zinntetrachlorid, wobei in einem Kreislauf dem Reaktionsraum Zinntetrachlorid entnommen und ggf. nach Kühlung wieder zugeführt und soviel Zinntetrachlorid aus dem Kreislauf abgeführt wird, daß die Standhöhe des Zinntetrachlorids im Reaktionsraum gleich bleibt,
**dadurch gekennzeichnet**,
daß das Chlor außerhalb des gesamten im Kreislauf befindlichen Reaktionsraums in den im Kreis geführten Strom von Zinntetrachlorid in einer solchen Menge eingeleitet wird, daß es vollständig im Zinntetrachlorid gelöst wird.

2. Verfahren nach Anspruch 1, dadurch gekennzeichnet, daß das Chlor in flüssigem Zustand in den im Kreis geführten Strom von Zinntetrachlorid eingeleitet wird.

3. Verfahren nach einem der Ansprüche 1 oder 2, dadurch gekennzeichnet, daß das mit Chlor angereicherte Zinntetrachlorid unten in den Reaktionsraum eingeleitet und nach Durchströmen der im Reaktionsraum vorhandenen Zinnschüttung weiteroben zur erneuten Anreicherung mit Chlor entnommen wird.

4. Verfahren nach einem der vorhergehenden Ansprüche, dadurch gekennzeichnet, daß das aus dem Kreislauf abgeführte, gebildete Zinntetrachlorid durch einen oberen, mit metallischem Zinn, z.B. in Form von Zinn-Granalien, gefüllten Teil des Reaktionsraums geleitet wird, der über dem im Kreis geführten Strom von Zinntetrachlorid liegt.

5. Verfahren nach einem der vorhergehenden Ansprüche, dadurch gekennzeichnet, daß die Temperatur im oberen Teil des Reaktionsraums so eingestellt wird, daß die Nachreaktion vollständig ist.

6. Verfahren nach einem der vorhergehenden Ansprüche, dadurch gekennzeichnet, daß die im Reaktionsraum von dem im Kreis geführten Zinntetrachlorid durchströmte Schüttung aus Zinn, z.B. in Form von Zinn-Granalien, wenigstens das 3-fache Gewicht des stündlich eingeleiteten Chlor-Gewichts hat.

7. Verfahren nach einem der vorhergehenden Ansprüche, dadurch gekennzeichnet, daß je 1 kg pro Stunde eingeleiteten Chlors wenigstens 130 dm³/h Zinntetrachlorid im Kreis geführt werden.

8. Verfahren nach einem der vorhergehenden Ansprüche, dadurch gekennzeichnet, daß das Gewicht der Zinn-Schüttung im oberen Teil des Reaktionsraums wenigstens dem Gewicht der Zinnschüttung im unteren, von dem im Kreis geführten Zinntetrachlorid durchströmten Teil des Reaktionsraums entspricht.

9. Verfahren nach einem der vorhergehenden Ansprüche, dadurch gekennzeichnet, daß derobere Teil des Reaktionsraums auf der Temperatur des unteren Teils des Reaktionsraums gehalten wird.

10. Verfahren nach Anspruch 5, dadurch gekennzeichnet, daß der obere Teil des Reaktionsraums durch das im Kreis geführte Zinntetrachlorid temperiert wird.

11. Verfahren nach einem der vorhergehenden Ansprüche, dadurch gekennzeichnet, daß die Temperatur am Eintritt des im Kreis geführten Zinntetrachlorids in den Reaktionsraum 70 bis 80°C beträgt.

## Claims

1. A method for the continuous production of tin tetrachloride in which excess metallic tin is reacted with chlorine in a reaction chamber in the presence of liquid tin tetrachloride, the tin tetrachloride being withdrawn from circulation in the reaction chamber and being added to it again, if necessary after cooling, and the quantity of tin tetrachloride removed from circulation being such that the level of tin tetrachloride in the reaction chamber remains constant,
characterised in that
the quantity of chlorine introduced into the circulating flow of tin tetrachloride outside the complete reaction chamber present in the circulation is such that it is completely dissolved in the tin tetrachloride.

2. A method according to Claim 1, characterised in that the chlorine is introduced into the circulating flow of tin tetrachloride in a liquid state.

3. A method according to either Claim 1 or 2, characterised in that the tin tetrachloride enriched with chlorine is introduced into the bottom region of the reaction chamber and, following flow through the tin bed present in the reaction chamber, is withdrawn higher up for the addition of further chlorine.

4. A method according to any preceding claim, characterised in that the synthesized tin tetrachloride removed from the circulation is fed through an upper section of the reaction chamber filled with metallic tin, for instance in the form of tin granules, lying above the circulating flow of tin tetrachloride.

5. A method according to any preceding claim, characterised in that the temperature in the upper section of the reaction chamber is adjusted such that the secondary reaction is complete.

6. A method according to any preceding claim, characterised in that the weight of the tin bed, for instance in the form of tin granules, in the reaction chamber through which the tin tetrachloride circulates is at least threefold that of the quantity of chlorine introduced per hour.

7. A method according to any preceding claim, characterised in that for each 1 kg of chlorine introduced per hour at least 130 dm³/h tin tetrachloride is circulated.

8. A method according to any preceding claim, characterised in that the weight of the tin bed in the upper section of the reaction chamber is at least equal to that in the lower section of the reaction chamber through which the tin tetrachloride is circulated.

9. A method according to any preceding claim, characterised in that the upper section of the reaction chamber is maintained at the temperature of the lower section of the reaction chamber.

10. A method according to Claim 5, characterised in that the temperature of the upper section of the reaction chamber is controlled through the circulated tin tetrachloride.

11. A method according to any preceding claim, characterized in that the temperature obtaining at the point of entry of the circulated tin tetrachloride into the reaction chamber is 70 to 80°C.

## Revendications

1. Procédé pour la fabrication en continu de tétrachlorure d'étain par réaction d'étain métallique en excès avec du chlore, dans un espace de réaction, en présence de tétrachlorure d'étain liquide, procédé suivant lequel, dans une boucle, du tétrachlorure d'étain est prélevé de l'espace de réaction, et, le cas échéant après refroidissement, ramené à ce dernier, et il retiré de la boucle autant de tétrachlorure d'étain que nécessaire pour que le niveau du tétrachlorure d'étain dans l'espace de réaction reste constant, caractérisé par le fait que le chlore est introduit, en dehors de l'espace de réaction intégral, se trouvant dans la bouche, dans le courant de tétrachlorure d'étain amené à circuler dans la bouche, dans une quantité telle qu'il est complètement dissous dans le tétrachlorure d'étain.

2. Procédé selon la revendication 1, caractérisé par le fait que le chlore est introduit à l'état liquide dans le courant de tétrachlorure d'étain amené à circuler dans la boucle.

3. Procédé selon la revendication 1 ou 2, caractérisé par le fait que le tétrachlorure d'étain enrichi en chlore est introduit à la base de l'espace de réaction et, après passage à travers la masse en vrac d'étain présente dans l'espace de réaction, est retiré plus haut pour être à nouveau enrichi en chlore.

4. Procédé selon l'une des revendications précédentes, caractérisé par le fait que le tétrachlorure d'étain formé, retiré de la boucle, est dirigé à travers une partie supérieure, remplie d'étain métallique, par exemple sous la forme de grenaille d'étain, de l'espace de réaction, qui se situe au-dessus du courant de tétrachlorure d'étain amené à circuler dans la boucle.

5. Procédé selon l'une des revendications précédentes, caractérisé par le fait que la température dans la partie supérieure de l'espace de réaction est réglée de telle sorte que la réaction ultérieure soit totale.

6. Procédé selon l'une des revendications précédentes, caractérisé par le fait que la masse en vrac d'étain, par exemple sous la forme de grenaille d'étain, traversée dans l'espace de réaction par le tétrachlorure d'étain amené à circuler dans la boucle, a au moins 3 fois le poids du chlore introduit par heure.

7. Procédé selon l'une des revendications précédentes, caractérisé par le fait que, par kg de chlore introduit par heure, au moins 130 dm³/h de tétrachlorure d'étain sont amenés à circuler dans la boucle.

8. Procédé selon l'une des revendications précédentes, caractérisé par le fait que le poids de la masse en vrac d'étain dans la partie supérieure de l'espace de réaction correspond au moins au poids de la masse en vrac d'étain dans la partie inférieure, traversée par le tétrachlorure d'étain amené à circuler dans la boucle, de l'espace de réaction.

9. Procédé selon l'une des revendications précédentes, caractérisé par le fait que la partie supérieure de l'espace de réaction est maintenue à la température de la partie inférieure de l'espace de réaction.

10. Procédé selon la revendication 5, caractérisé par le fait que la partie supérieure de l'espace de réaction est tempérée par le tétrachlorure d'étain amené à circuler dans la boucle.

11. Procédé selon l'une des revendications précédentes, caractérisé par le fait que la température d'entrée du tétrachlorure d'étain amené à circuler dans la boucle, dans l'espace de réaction s'élève à une valeur de 70 à 80°C.
